# EUROPEAN PATENT SPECIFICATION

(11) **EP 1 224 095 B1**
(45) Date of publication and mention of the grant of the patent: **12.04.2006**
(21) Application number: 00964799.1
(22) Date of filing: 06.10.2000
(51) Int. Cl.: B60N 2/48

(54) **INERTIAL BLOCKING UNIT, ESPECIALLY FOR ELEMENTS OF VEHICLE INTERIOR EQUIPMENT**
TRÄGHEITSSPERREINHEIT, INSBESONDERE FÜR FAHRZEUGINNENAUSBAU- ELEMENTE
UNITE DE BLOCAGE PAR INERTIE, DESTINEE EN PARTICULIER A DES ELEMENTS D'EQUIPEMENT INTERIEUR DE VEHICULE

(30) Priority: 06.10.1999 PL 33582599
(43) Date of publication of application: 24.07.2002
(73) Proprietor: Gestind Poland SP. Z O.O., 43-382 Bielsko-Biala (PL)
(72) Inventor: DE FILIPPO, Emilio, I-10050 Bruzolo (IT)
(74) Representative: Jorio, Paolo
(86) International application number: PCT/PL2000/000067
(87) International publication number: WO 2001/025051

(56) References cited:
- DE-A- 2 708 461
- US-A- 5 556 159
- US-A- 5 738 412
- US-A- 5 934 750

## Description

The object of the invention is the inertial blocking unit that can be used in the elements of vehicle interior equipment such as a headrest, and that is to prevent changing the position of e.g. headrest in case of car accident.

There is an inertial blocking unit known from e.g. Polish application description no. P-334432, which is an inertial element situated in a slideable way in the appropriately formed seat in the direct neighbourhood of the element that is to be blocked in case of a car accident. The inertial element is in a form of flat oblong element with its bases built of parallel planes and its working surfaces are in a shape adjusted to the surface of the side wall of the seat and the element to be blocked that are mating with them and moreover, the wedging condition must be fulfilled, i.e., the angle between at least two tangents to the mating surfaces in their contact points lying on the opposite sides of the inertial element is smaller than the minimal friction angle for a pair of mating surfaces of a bigger friction angle. The inertial element is maintained in the passive position with the established force by a catch that is connected with a seat and is mating with the relevant recess on one of the flat bases.
Furthermore, also Polish application description no. P-334435 informs about an inertial blocking unit used for a tiltable car seat headrest, which contains an inertial element assigned to the mechanism of changing headrest inclination, where the inertial element relocates with a plane motion from the rest position to the blocking position.
The relocation of the inertial element from rest position to the blocking position in both mentioned examples is implemented under the influence of inertial force affecting that element after exceeding the established acceleration in the frontward or backward direction.
A further inertial blocking unit is known from DE-A1-27 08 961 (corresponding to the preamble of claim 1 or 2).

The purpose of the invention is to prepare a reliable inertial blocking unit that does not pose any technical problems. According to the invention, there is provided an inertial blocking unit as defined in claim 1 and in claim 2.

The essential idea of the invention is the construction of the inertial blocking set with the inertial element in the form of a flat element close to a circular sector and situated near the element that is to be blocked in the established position in the seat on the axis with a possibility of implementing rotary motion around that axis. The working surfaces of the inertial element are situated on the perimeter of the circular sector and they are mating with appropriately formed fragment of the seat or in the second version - directly with the blocked element, in both cases fulfilling the wedging condition. The working surfaces are separated with the area corresponding with the rest position of the inertial element.

The unit of the inertial blocking according to the invention can be used for immobilising various elements of car equipment in the established position in case of an accident. It can be placed in the guiding sleeve of a headrest bracket having recesses. A spring inserted in that sleeve is mating with those recesses. In that case, relocation of the inertial element from the passive position to the active one - the blocking position prevents the uncontrolled release of the spring from a recess on the bracket. Similarly, the blocking unit can be used for blocking the angular position of the tiltable headrest.

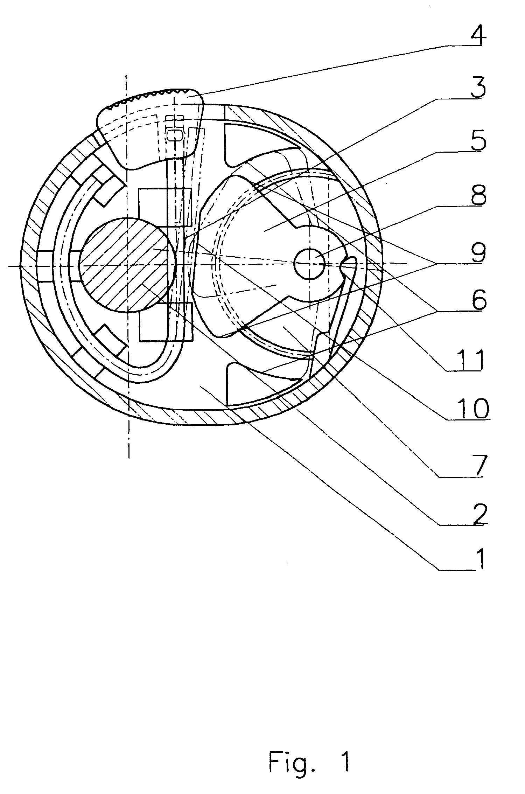

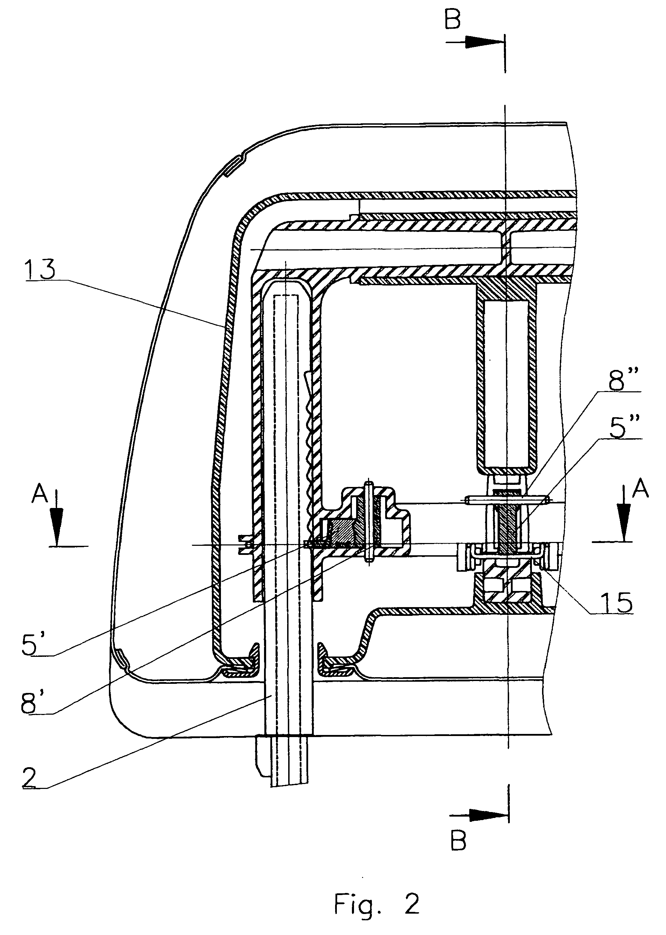

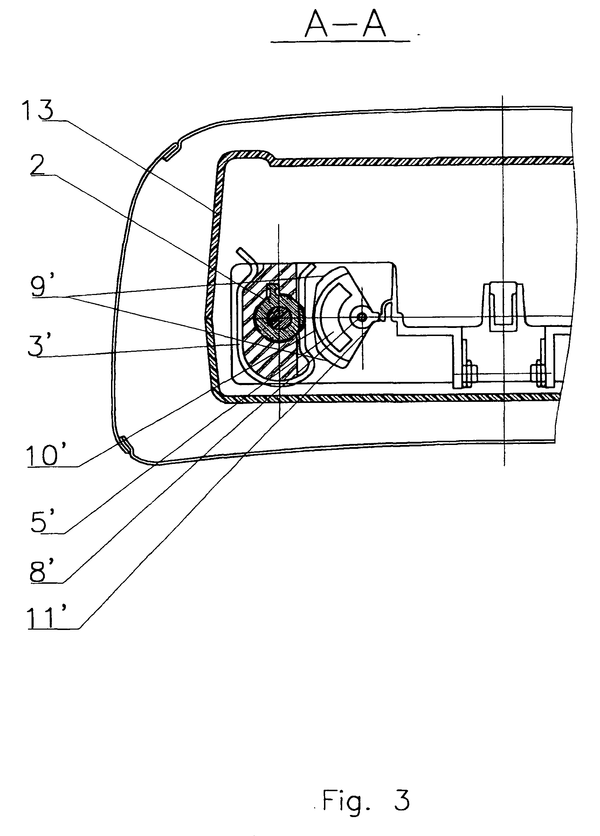

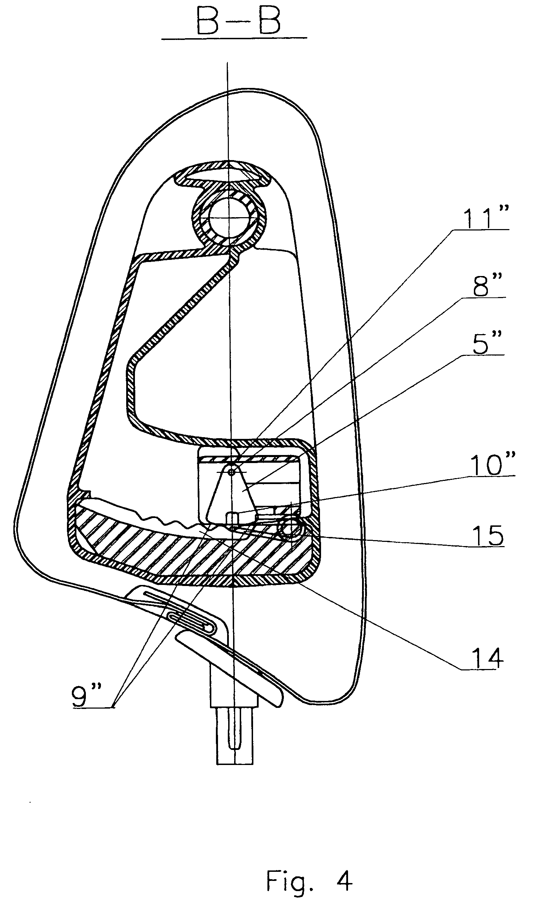

The object of the invention has been more precisely described in the example products in the drawing, where Fig. 1 shows the section of a flange of the bracket guiding sleeve of the headrest, Fig. 2 - vertical section of the tiltable headrest created by a plane crossing the longitudinal axes of the brackets, Fig. 3 - A-A section of the headrest of Fig. 2, and Fig. 4 presents B-B section of the headrest of Fig. 2.

The inertial blocking unit is situated in the flange 1 of the guiding sleeve near the bracket 2 having a number of recesses corresponding to different positioning of headrest height. The spring 3 that adjust headrest height stepwise is placed in the recess. The inertial blocking unit, situated near the spring 3, consists of the inertial element 5 and appropriately formed walls 6 of the seat 7 in the flange 1 of the sleeve. The inertial element 5 is situated in a way that enables rotary motion on the axis 8. The inertial element 5 is in a form of flat profile close to a circular sector, and the working surfaces 9 are located on the periphery and are separated with the area 10, of a smaller distance to the axis of rotation 8, which corresponds with the passive position of the inertial element 5. The working surfaces 9 of the inertial element 5 and the walls 6 of the seat 7, which are mating with them, together with the surface connected with the axis 8, fulfil the wedging condition. The inertial element 5 is maintained in the passive position with the established force by the catch 11, connected with the seat 7, which is mating with the proper recess produced on the inertial element 5.
The sleeve with an inertial blocking unit functions as follows.
In order to change the height of headrest position and slid the spring 3 out of the recess in the bracket 2, the headrest cushion is relocated into the desired position. At the same time the inertial element 5 is maintained in the rest position by the catch 11, and the area 10 is placed opposite to the spring 3 without touching it. In case of car accident, when the acceleration exceeds the established value, the inertial element 5 is released from the catch 11 and it performs a rotary motion around the axis 8 and one of its working surfaces 9 approaches the appropriate wall 6 of the seat 7 and it wedges itself between the wall 6 and the surface connected with the axis 8. Simultaneously, the other working surface 9 approaches the spring 3 and decreases the clearance between the spring 3 and the bracket 2. In this position the spring 3 is blocked and it prevents any changes of headrest position, which protects man's head in a car accident.

The second version of the solution of the inertial blocking unit in the tiltable headrest example is presented by the figures 2 - 4 in the drawing.

The headrest brackets 2 are permanently mounted on the car seat and at least one of the brackets has the positioning recesses. Inside the headrest cushion there is a slideable framework 12 and the rotary framework 13. The system of headrest height adjustment is connected with the slideable framework 12, and the system of headrest angular setting is connected with the slideable framework 12 and the rotary framework 13. The slideable framework 12 includes slideways of the brackets 2 and springs 3' connected with them, which enter the recesses of the brackets 2. Near at least one spring 3' there is the inertial blocking unit consisting of a part of spring 3' and inertial element 5' situated in a way that enables rotary motion on the axis 8', which is maintained in the passive position with the established force by the catch 11' connected with the slideable framework 12' mating with the appropriate recess on the inertial element 5'. The inertial element 5' is in a form of a flat profile close to a circular sector, and the working surfaces 9' are placed on the periphery and they are separated with the area 10' of a smaller distance to the axis of rotation 8', which corresponds with the passive position of the inertial element 5'. The working surfaces 9' of the inertial element 5' and the part of the spring 3' that is mating with them fulfil the wedging condition.
The system of the cushion angular adjustment contains a toothed setting element 14*,* which is connected with the rotary framework 13. The positioning spring 15 mounted in the slideable framework 12 is mating with the notches of the toothed setting segment 14. Near the toothed setting segment 14 there is the inertial element 5". It is situated on the horizontal axis 8" in a way that enables rotary motion and it is maintained in the passive position with the established force by the catch 11". The inertial element 5" is in a form close to a flat circular sector and its working surfaces 9" are separated by the area of passive position 10". The working surfaces 9" are mating with the positioning spring 15, when they are in the active position. The inertial blocking units function as follows.
In order to change the height of the headrest position, the headrest cushion is relocated into the desired position and its remains in that position when the spring 3' enters the notch of the bracket 2. At the same time the inertial element 5' is hold in the rest position by the catch 11' and the area 10' is placed opposite to the spring 3' without touching it. In case of exceeding the established limiting acceleration, the catch 11' releases the inertial element 5', which rotates around the axis 8' and one of its working surfaces 9' contacts the spring 3' situated in the notch of the bracket 2 and at the fulfilled wedging condition, it blocks itself between the spring 3' and the surface connected with the axis 8', then it presses the spring 3' to the notch and prevents leaving it. In case of exceeding the established acceleration, also in the system of angular setting, the catch 11" releases the inertial element 5", which rotates in relation to the axis 8" and one of its working surfaces 9" contacts the positioning spring 15 and at the fulfilled wedging condition, it prevents the positioning spring 15 from leaving the notch of the setting segment 14.

The examples described above do not present all possible applications of inertial blocking units according to the invention.

## Claims

1. Inertial blocking unit, especially for elements of a vehicle interior equipment, comprising an inertial element (5), which has appropriately formed working surfaces (9) and a recess, is situated in a seat (7) near a element (3) to be blocked, and is movable in response of an acceleration directed frontward or backward and exceeding an established value from a passive position, in which it is maintained with an established force by a catch (11) engaging said recess, to a wedging condition, in which said working surfaces (9) cooperate with mating surfaces (6) and said element to be blocked (3) is blocked;
**characterised in that**:
- the inertial element (5) is in the form of a flat element close to a circular sector and it is situated on an axis (8) in a way that enables its rotary motion, and
- the working surfaces (9) are placed on an arched part of the circular sector and they are separated by an area of passive position (10) located at a smaller distance from the axis (8) in comparison with said working surfaces (9), and
- near each of said working surfaces (9) there is a seal (7) provided with walls (6); in said wedging condition, said working surfaces (9) wedging between the respective walls (6) and a surface connected with the axis (8).

2. Inertial blocking unit, especially for elements of a vehicle interior equipment, comprising an inertial element (5), which has appropriately formed working surfaces (9) and a recess, is situated in a seat (7) near a element to be blocked (3), and is movable in response of an acceleration directed frontward or backward and exceeding an established value from a passive position, in which it is maintained with an established force by a catch (11) engaging said recess, to a wedging condition, in which said working surfaces (9) cooperate with mating surfaces (6) and said element to be blocked (3) is blocked;
**characterised in that**:
- the inertial element (5',5") is in the form of a flat element close to a circular sector and it is situated on an axis (8',8") in a way that enables its rotary motion, and
- the working surfaces (9',9") are placed on an arched part of the circular sector and they are separated by an area of passive position (10',10") located at a smaller distance from the axis (8',8") in comparison with said working surfaces (9',9"), and
- said mating surfaces comprise a part of an elastic element (3',15) to be blocked in said wedging condition, said working surfaces (9',9") wedging between said part and a surface connected with the axis (8', 8").

## Patentansprüche

1. Trägheitssperreinheit, insbesondere für Elemente eines Fahrzeuginnenausbaus, umfassend ein Trägheitselement (5), das geeignet geformte Angriffsflächen (9) und eine Ausnehmung hat, in einem Sitz (7) nahe einem zu sperrenden Element (3) angeordnet ist, und das in Antwort auf eine Beschleunigung, die vorwärts oder rückwärts gerichtet ist und einen eingestellten Wert übersteigt, von einer passiven Position, in der es mit einer vorgegebenen Kraft durch eine Klinke (11) gehalten wird, die an der Ausnehmung angreift, in einen verkeilten Zustand bewegbar ist, in dem die Angriffsflächen (9) mit Gegenflächen (6) zusammen wirken und das zu sperrende Element (3) gesperrt ist;
**dadurch gekennzeichnet, dass**
- das Trägheitselement (5) die Form eines flachen Elementes näherungsweise gleich einem Kreissektor hat und auf einer Achse (8) in einer Weise angeordnet ist, die seine Drehbewegung ermöglicht, und
- die Angriffsflächen (9) auf einen Bogenabschnitt des Kreissektors angeordnet sind und von einem Bereich passiver Position (10) getrennt sind, der im Vergleich zu den Angriffsflächen (9)unter einem kleinerem Abstand von der Achse (8) liegt, und
- nahe jeder der Angriffsflächen (9) ein Sitz (7) vorgesehen ist, der mit Wänden (6) versehen ist, wobei die Angriffsflächen (9) in dem verkeilten Zustand zwischen den entsprechenden Wänden (6) und einer Fläche eingekeilt sind, die mit der Achse (8) verbunden ist.

2. Trägheitssperreinheit, insbesondere für Elemente eines Kraftfahrzeuginnenausbaus, umfassend ein Trägheitselement (5), das geeignet geformte Angriffsflächen (9) und eine Ausnehmung hat, in einem Sitz (7) nahe einem zu sperrenden Element (3) angeordnet ist, und das in Antwort auf eine Beschleunigung, die vorwärts oder rückwärts gerichtet ist und einen eingestellten Wert übersteigt, von einer passiven Position, in der es mit einer vorgegebenen Kraft durch eine Klinke (11) gehalten wird, die an der Ausnehmung angreift, in einen verkeilten Zustand bewegbar ist, in dem die Angriffsflächen (9) mit Gegenflächen (6) zusammen wirken und das zu sperrende Element (3) gesperrt ist;
**dadurch gekennzeichnet, dass**
- das Trägheitselement (5', 5") die Form eines flachen Elementes näherungsweise gleich einem Kreissektor hat und auf einer Achse (8', 8") in einer Weise angeordnet ist, die seine Drehbewegung ermöglicht, und
- die Angriffsflächen (9',9") auf einem Bogenabschnitt des Kreissektors angeordnet sind und durch einen Bereich passiver Position (10', 10") getrennt ist, der im Vergleich zu den Angriffsflächen (9',9")unter einem kleinerem Abstand von der Achse (8', 8") angeordnet ist, und
die Gegenflächen einen Teil eines elastischen Elements (3', 15), das in dem verkeilten Zustand gesperrt werden soll, aufweist, wobei die Angriffsflächen (9',9") zwischen dem Teil und einer Fläche, die mit der Achse (8', 8") verbunden ist, eingekeilt sind.

## Revendications

1. Unité de blocage par inertie, notamment pour des éléments d'équipement intérieur de véhicule, comprenant un élément d'inertie (5), qui présente des surfaces de travail formées de façon appropriée (9) et un évidement, qui est située dans un siège (7) près d'un élément (3) devant être bloqué et qui est mobile en réponse à une accélération dirigée vers l'avant ou vers l'arrière et dépassant une valeur établie depuis une position passive dans laquelle elle est maintenue avec une force établie par un verrou (11) venant en prise dans ledit évidement selon une condition de coincement, dans laquelle lesdites surfaces de travail (9) coopèrent avec des surfaces d'adaptation (6) et ledit élément devant être bloqué (3) est bloqué ;
**caractérisée en ce que** :
- l'élément d'inertie (5) est sous la forme d'un élément plat près d'un secteur circulaire et est situé sur un axe (8) afin de permettre son mouvement de rotation, et
- les surfaces de travail (9) sont placées sur une partie arquée du secteur circulaire et elles sont séparées par une zone de position passive (10) située à une plus petite distance de l'axe (8) comparativement auxdites surfaces de travail (9), et
- près de chacune desdites surfaces de travail (9) il y a un siège (7) muni de parois (6) ; dans ladite condition de coincement, lesdites surfaces de travail (9) sont coincées entre les parois respectives (6) et une surface reliée à l'axe (8).

2. Unité de blocage par inertie, notamment pour des éléments d'équipement intérieur de véhicule, comprenant un élément d'inertie (5), qui présente des surfaces de travail formées de façon appropriée (9) et un évidement, qui est située dans un siège (7) près d'un élément (3) devant être bloqué et est mobile en réponse à une accélération dirigée vers l'avant ou vers l'arrière et dépassant une valeur établie depuis une position passive dans laquelle elle est maintenue avec une force établie par un verrou (11) venant en prise dans ledit évidement selon une condition de coincement, dans laquelle lesdites surfaces de travail (9) coopèrent avec des surfaces d'adaptation (6) et ledit élément devant être bloqué (3) est bloqué ;
**caractérisée en ce que** :
- l'élément d'inertie (5', 5") est sous la forme d'un élément plat près d'un secteur circulaire et est situé sur un axe (8', 8") afin de permettre son mouvement de rotation, et
- les surfaces de travail (9', 9") sont placées sur une partie arquée du secteur circulaire et elles sont séparées par une zone de position passive (10', 10") située à une plus petite distance de l'axe (8', 8") comparativement auxdites surfaces de travail (9', 9"), et
- lesdites surfaces d'adaptation comportent une partie d'un élément élastique (3', 15) devant être bloqué dans ladite condition de coincement, lesdites surfaces de travail (9', 9") étant coincées entre ladite partie et une surface reliée à l'axe (8', 8").
